# EUROPEAN PATENT APPLICATION

(11) **EP 0 705 863 A1**
(43) Date of publication of application: **10.04.1996**
(21) Application number: 95114714.9
(22) Date of filing: 19.09.1995
(51) Int. Cl.: C08G 73/18, C08J 9/10

(54) **Two stage melt polymerization process for making polybenzimidazoles**

(30) Priority: 04.10.1994 US 317943
(71) Applicant: HOECHST CELANESE CORPORATION, Somerville, N.J. 08876 (US)
(72) Inventor: Wolf, Arno E., Charlotte, North Carolina (US); Ward, Bennett C., N. Denver, North Carolina (US); Trotter, James C., Easley, South Carolina (US)
(74) Representative: von Kreisler, Alek, Dipl.-Chem.

(57) **Abstract**

The present invention is directed to a two stage melt polymerization process for producing polybenzimidazoles and aromatic amide polymers. The process includes the steps of: 1) providing a mixture of an aromatic amine, a dicarboxylic component, and a foaming agent; 2) heating the mixture to a condensation polymerization temperature in a first stage under a substantially oxygen-free atmosphere; 3) maintaining the mixture at that temperature, but in no event at a temperature greater than 350°C while allowing a friable foam to form; 4) cooling the foam; 5) crushing the foam to obtain a prepolymer; and 6) heating the prepolymer in a second stage, to a temperature in excess of the highest temperature employed in the first stage, under a substantially oxygen-free atmosphere, and until a desired inherent viscosity is obtained.

## Description

### Field of the Invention

The present invention is directed to a two stage melt polymerization process for making, among other things, polybenzimidazoles.

### Background of the Invention

High molecular weight polybenzimidazoles are polymers of high thermal stability, excellent resistance to oxidative or hydrolytic degradation, and which can be formed into shaped articles such as fibers and films. As taught by the published literature, polybenzimidazoles may be prepared in several ways; for example, by melt polymerizing an aromatic tetraamine and an aromatic or heterocyclic dicarboxylic acid, ester or anhydride in a one or two stage process (see H. Vogel and D.S. Marvel, Journal of Polymer Science, Vol. L, pages 511-539 (1961), and U.S. Patent No. 3,551,389) and by solution polymerization in the presence of polyphosphoric acid (see U.S. Patent No. 3,313,783 and Iwakura et al., Journal of Polymer Science: Part A, Vol. 2., pages 2505-2515 (1964)).

U.S. Patent No. 3,551,308 discloses a two stage process for the production of polybenzimidazoles, in which the monomers are heated at a temperature above 170°C in a first stage melt polymerization zone until a foamed prepolymer is formed. This foamed prepolymer is cooled, pulverized, and introduced into a second stage polymerization zone where it is heated again to yield a polybenzimidazole.

U. S. Patent Nos. 4,588,808; 4,672,104; and 4,717,764 are directed to further improvements to the foregoing melt polymerization process. U.S. Patent No. 4,588,808 discloses a two stage process for the production of polybenzimidazoles using a free dicarboxylic acid as the dicarboxylic monomer component. U.S. Patent No. 4,672,104 discloses a two stage process for the production of polybenzimidazoles by reacting an aromatic tetraamine and a dicarboxylic component wherein no more than 95% of the carboxylate groups of the latter component are the free acid or phenyl ester. U.S. Patent No. 4,717,764 discloses a two stage process for the production of polybenzimidazoles/aromatic amide polymers (including aromatic amines polymers and copolymers and wholly aromatic polyamides, see, for example, U.S. Patent Nos. 3,063,966 and 3,094,511, both are incorporated herein by reference). In this process, an aromatic amine, comprising aromatic diamines or triamine or tetraamines, is reacted with an aromatic dicarboxylic acid and/or ester. U.S. Patent Nos. 4,588,808; 4,672,104; and 4,717,764 are incorporated herein by reference.

While each of the three latter mentioned patents disclose significant improvements to the manufacture of polybenzimidazoles and related polymers, further work has been preformed. The formation of a friable foam is critical to the foregoing processes. Without such a foam, removal of the prepolymer from the reaction vessel is extremely difficult. For example, when isophthalic acid (IPA) is used as the dicarboxylic acid component, a dense prepolymer is formed, instead of a good friable foam. This dense prepolymer is difficult to remove from the reaction vessel. Accordingly, there is a need to improve the foam formation properties of the reaction mix in these processes.

### Summary of the Invention

The present invention is directed to a two stage melt polymerization process for producing polybenzimidazoles and aromatic amide polymers. The process includes the steps of: 1) providing a mixture of an aromatic amine, a dicarboxylic component, and a foaming agent; 2) heating the mixture to a condensation polymerization temperature in a first stage under a substantially oxygen-free atmosphere; 3) maintaining the mixture at that temperature, but in no event at a temperature greater than 350°C while allowing a friable foam to form; 4) cooling the foam; 5) crushing the foam to obtain a prepolymer; and 6) heating the prepolymer in a second stage, to a temperature in excess of the highest temperature employed in the first stage, under a substantially oxygen-free atmosphere, and until a desired inherent viscosity is obtained.

### Detailed Description of the Invention

In the present invention, "aromatic amines" refer to aromatic diamines, aromatic triamines, aromatic tetraamines, or combinations thereof.

The aromatic diamines contemplated have the formula:

NH₂-Ar-NH₂

wherein Ar is a divalent aromatic radical in which the amine groups are bonded to non-adjacent carbon atoms. Examples of such radicals are: m- and p-phenylene; biphenylene, in which the amine groups are attached to ring carbon atoms in each of the two rings which are non-adjacent to the carbon atoms linking the two rings (e.g., 3,3'-biphenylene and 4,4'-biphenylene); naphthylene (e.g., 2,6-naphthylene and 2,7-naphthylene); radicals having the formula: 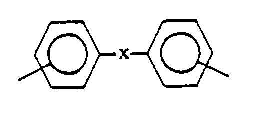
where X represents -0-, -S-, -SO₂-, -C- or a lower alkylene group, such as -CH₂-, -(CH₂)₂-, or -C(CH₃)₂-, and the ring carbon atoms bonded to the amine groups are non-adjacent to the ring carbon atoms bonded to the "X" groups. Any of the hydrogen atoms bonded to ring carbon atoms in the foregoing radicals may be substituted with radicals inert to the conditions of reaction, e.g. lower alkyl or alkoxy (e.g. containing up to four carbon atoms), halogen, sulfonyl or nitro, with the number of carbon atoms in the substituent groups does not exceeding nine.

Exemplary diamines include meta-phenylene diamine and lower alkyl substituted meta-phenylene diamines (such as: methyl-, ethyl-, propyl-, etc., meta-phenylene diamine; dimethyl, trimethyl, tetramethyl, diethyl, triethyl, and triisopropyl meta-phenylene diamine; 2-methyl-4-ethyl meta-phenylene diamine and 2-methyl-4-ethyl-5-propyl meta-phenylene diamine; methoxy-, ethoxy-, propoxy-, and butoxy-, meta-phenylene diamine; dimethoxy, trimethoxy, tetramethoxy, and diethoxy meta-phenylene diamine; 2-methoxy-4-ethoxy meta-phenylene diamine; halogen-substituted meta-phenylene diamine as exemplified by chloro, bromo, and fluoro meta-phenylene diamine; and nitro meta-phenylene diamines).

Exemplary diamines also include unsubstituted and substituted para-phenylene diamines corresponding to the foregoing meta-phenylene diamines. There may be one or more or a combination of substituents attached to the aromatic ring, so long as the total number of carbon atoms in all substituents attached to an aromatic ring does not exceed nine.

Exemplary diamines also include multiple or fused ring aromatic diamines in which the amino groups are oriented meta or para with respect to each other. Examples of such compounds are 4,4'-diphenyldiamine (benzidine), 3,3'-oxydiphenyldiamine, 3,3'-sulfonyldiphenyldiamine, 3,3'-diphenyldiamine, 2,6-diaminonaphthalene and 1,5-diaminonaphthalene and corresponding compounds in which one or both of the aromatic rings contains one or more or a combination of lower alkyl, lower alkoxy, halogen, nitro, and sulfonyl groups and the total number of carbon atoms in the substituent groups attached to an aromatic ring does not exceed nine.

The aromatic triamines have the formula: 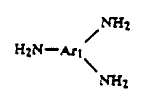
wherein Ar₁ is a trivalent aromatic radical having any of the foregoing ring structures identified as suitable for the previously defined divalent Ar but with two adjacent ring carbon atoms bonded to amine groups and a third ring carbon atom bonded to an amine group non-adjacent to each of the other ring carbon atoms bonded to amine groups. The hydrogen atoms bonded to ring carbon atoms of the trivalent Ar₁ radical may be replaced with the same substituent groups specified above for the Ar radical as long as the total number of carbon atoms in the substituent groups of each aromatic ring does not exceed nine. When the structure of Ar₁ contains more than one linked aromatic ring, it is preferable that the amine groups on adjacent carbon atoms occur on a different ring than the amine groups bonded to a non-adjacent carbon atom. Moreover, in the case of linked multi-ring structures, e.g. biphenyl derivatives, it is preferable that all the ring carbon atoms bonded to amine groups are non-adjacent to the carbon atoms linked to carbon atoms of other rings.

Examples of aromatic triamines include: 3,4,4'-triaminobiphenyl (TRI); 3,4,3'-triaminobiphenyl; 1,2,4,-triaminobenzene; 1,2,5-triaminonaphthalene; 1,2,6-triaminonaphthalene; 2,3,6-triaminonaphthalene; 2,3,7-triaminonaphthalene; 3,4,4'-triamiodiphenyl methane; 3,4,4'-triaminodiphenyl ethane; 3,4,4'-triaminodiphenyl-2,2-propane, 3,4,4'-triaminodiphenyl thioether; and 3,4,4'-triaminodiphenyl sulfone. The preferred aromatic triamine is 3,4,4'-triaminobiphenyl.

The aromatic tetraamines have the formula: 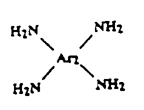
wherein Ar₂ is a tetravalent aromatic radical having any of the ring structures identified as suitable for the previously defined Ar and Ar₁ but with two pairs of adjacent ring carbon atoms bonded to amine groups and the carbon atoms of each pair being non-adjacent to those of the other pair. Again, the hydrogen atoms bonded to any of the ring carbon atoms may be replaced with the same substituent groups specified above in the description of Ar and Ar₁ as long as the number of carbon atoms in the substituent groups of each aromatic ring does not exceed nine. As in the case with Ar and Ar₁, it is preferred, when Ar₂ is a multi-ring structure with linked aromatic rings (e.g. biphenyl), that the ring carbon atoms bonded to amine groups not be adjacent to the linked carbon atoms.

Exemplary aromatic tetraamines include 3,3',4,4'-tetraaminobiphenyl; 1,2,4,5-tetraaminobenzene; 1,2,5,6-tetraaminonaphthalene; 2,3,6,7-tetraaminonaphthalene; 3,3',4,4'-tetraaminodiphenyl methane; 3,3',4,4'tetraaminodiphenyl ethane; 3,3',4,4'-tetraaminodiphenyl-2,2-propane; 3,3',4,4'-tetraaminodiphenyl thioether; and 3,3',4,4'-tetraaminodiphenyl sulfone. The preferred aromatic tetraamine is 3,3',4,4'-tetraaminobiphenyl.

The dicarboxylic component of this invention is defined by the formula: 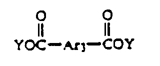
in which Ar₃ may be any of the divalent aromatic radicals identified previously (such as m-phenylene and p-phenylene, 4,4'-,3,3'- and 2,2'-biphenylene, and 1,6- and 2,6-naphthylene) and the Y's may be hydrogen, aryl or alkyl and may be the same or different. The dicarboxylic component may therefore be: a free acid, diester and/or monoester; a mixture of diester(s) and/or monoester(s); or a single dialkyl ester, monoester or mixed aryl-alkyl or alkyl/alkyl ester. When Y is alkyl, it preferably contains 1 to 5 carbon atoms and is more preferably methyl. When Y is aryl, it may be any monovalent aromatic group obtained by filling with hydrogen all the valences but one of the aromatic groups which may be any of the Ar groups disclosed previously, either substituted or substituted with any inert monovalent radical such as an alkyl or alkoxy containing 1 to 5 carbon atoms. Examples of such aryl groups are phenyl, naphthyl, the three possible phenylphenyl radicals and the three possible tolyl radicals. The preferred aryl group is usually phenyl.

Exemplary aromatic dicarboxylic acids suitable in free or esterified form as the dicarboxylic component include: isophthalic acid; terephthalic acid; 4,4'-biphenydicarboxylic acid; 1,4-naphthalene-dicarboxylic acid; 2,2-biphenyldicarboxylic acid (diphenic acid); phenylindandicarboxylic acid; 1,6 naphthalenedicarboxylic acid; 2,6-naphthalene dicarboxylic acid; 4,4'-diphenylether-dicarboxylic acid; 4,4'-diphenylsulfone dicarboxylic acid; 4-4'-diphenylthioether dicarboxylic acid. Isophthalic acid (IPA) is the dicarboxylic acid which in free or esterified form that is most preferred for use in the process of the present invention.

The "foaming agent" refers to any material that: is inert to the reaction described herein; when heated, releases a gas (the gas being inert to the reaction described herein, (e.g. N₂ or CO₂); and will not release the gas below about 190°C, optimally from about 190° - 300°C, and preferrably from about 220° - 280°C. A class of chemical compounds, exemplary of the foaming agents, are tetrazoles and their analogs. Such materials are commerically available; for example, "Expandex 5-PT", a 5-phenyltetrazole that releases N₂, is available from Uniroyal Chemical Co., Middlebury CT, and "Hydrocerol-HK", that releases CO₂, is available from the Henley Division of B. I. Chemicals, Montvale, NJ. The "Expandex 5-PT" material is preferred. The following foaming agents did not work because gas was released at to low a temperature: baking soda, and 1,1 azobisformamide. The foaming agent maybe added to the reaction mixture within the range of about 0.5 to about 10% by weight of the final polymer yield. These limit represent practical considerations, i.e., the lower limit represents a minimum for producing the necessary amount of gas, and the upper, an economic consideration. Preferrably, the foaming agent is added in the range of 0.5-5% and optimally at about 2.5%.

The polymerization process of this invention can be carried out with or without a catalyst. A catalyst, however, is utilized to increase the inherent viscosity of the polymer, catalysts include, for example: phosphorus compounds (such as triaryl phosphites and diaryl phosphites in which the aryl groups may be, for example, phenyl, tolyl and substituted phenyl wherein the substituents may be, for example, alkyl and alkoxy containing up to 4 carbon atoms, trialkyl phosphites wherein the alkyl groups contain up to 4 carbon atoms, triaryl phosphines wherein the aryl groups are phenyl, tolyl, naphthyl, fluorophenyl and methoxyphenyl, trialkyl phosphines, wherein the alkyl groups are propyl or butyl, halophosphines such as phenyldichlorophosphine, phosphorustihalides, phosphorusoxy trihalides, magnesium, manganese and alkali methal hypophosphites, e.g. sodium hypophosphites, and triaryl phosphates, e.g. triphenyl phosphate); tin compounds (such as m-butylstannoic acid, dibutyltin oxide, dibutyltin acetate, stannous chloride, stannic chloride, dibutyltin dilurate, and stannous oxalate); silanes and siloxanes of the formula: 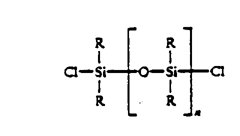
where R and R' may be the same or different and are methyl, phenyl or hydrogen and n is zero or an integer, e.g. up to 5, (such as dimethyldichlorosilane, diphenyldichlorosilane, methylphenyldichlorosilane, and 1,3-dichloro-1,1,3,3-tetramethylsiloxane); organic sulfonic acids (such as p-toluenesulfonic acid, benzenesulfonic acid, methanesulfonic acid, trifluoromethanesulfonic acid, and mixtures of the above); halogenated acetic acids (such as trifluoroacetic acid, and trichloroacetic acid, and mixtures of the above); and non-oxidizing acids (such as sulfuric acid, phosphoric acid, and hydrochloric acid). The preferred catalyst is triphenyl phosphite.

If a catalyst is employed, it is present in an amount, for example, of about 1 to 6 mole %, preferably about 2 to 4 mole % based on the total aromatic amine or dicarboxylic component.

The first stage of the process of the invention is carried out by heating the aromatic amine component, the dicarboxylic component, the foaming agent, and the catalyst, if used, with strong agitation to a temperature in the range of 230° to 350°C., and preferably 240° to 340°C. Depending on the melting point of the dicarboxylic component and the chemical nature of the aromatic amine and the aromatic dicarboxylic components, the agitated liquid mass will be a slurry, a homogenous mixture, or an emulsion of two immiscible liquids. At some point after the initiation of polymerization as indicated by condensate evolution, the agitation is discontinued and the mass is heated further, and in some cases, allowed to foam. In other cases, the polymer does not foam but adheres and then spontaneously flies off the reactor walls. The point at which the agitation is discontinued depends upon the nature of monomers being polymerized. For example, when the dicarboxylic component is a diphenyl ester (such as diphenyl isophthalate), the agitation may often be discontinued when condensate evolution begins. However, when the dicarboxylic component is a free acid (such as isophthalic acid) the discontinuance of agitation is generally at the point where the agitator torque and energy of agitation is at least about 150%, but has not risen above, for example, about 1000%, of the initial torque or agitation energy after the highest melting aromatic amine has melted, preferably not above about 300% such initial torque or agitation energy. The mass is then heated further without agitation to a temperature in the range, for example, of about 230° to 350°C., preferably about 280° to 390° C. Such heating is continued for a period of time in the range, for example, of about 0.25 to about 3 hours, and preferably about 0.5 to 1.5 hours. The mass is then cooled to a temperature below its melting point, e.g. room temperature which causes it to set up into a solid friable foam which is easily crushed or ground. In general, the inherent viscosity of the prepolymer after the first stage is complete is in the range, for example, of about 0.05 to 0.4 dl/g. (All inherent viscosities were measured from a solution of 0.4% by weight of polymer in 97% sulfuric acid at 25°C.)

The ground prepolymer is then further heated with normal agitation in a second stage at a temperature, for example, of about 300° to 420°C., preferably about 340° to 400°C. for a time period, for example, of about 0.25 to 4 hours, preferably about 0.5 to 2 hours or until the desired degree of polymerization is attained. In many cases, the final polymer has an inherent viscosity of at least 0.40 dl/g.

In both stages of the process of the present invention, a pressure is employed, preferably equal to at least atmospheric pressure, e.g., one to two atmospheres, and preferably atmospheric pressure. Such a pressure is commonly obtained by employing an open polymerization system provided with a condenser in order to remove the compounds which are produced as by-products of the reaction.

Both stages of the process are conducted in a substantially oxygen-free atmosphere. For example, an inert gas such as nitrogen or argon can be continuously passed through the reaction zone during the polymerization. The inert gas employed should be substantially oxygen-free, i.e., contain less than about 20 p.p.m. of oxygen, preferably less than about 8 p.p.m., and more preferably, be oxygen-free. The inert gas is introduced into the reaction zone at a rate of flow measured at standard conditions, that is, atmospheric pressure and temperature, within the range of about 1 to 200 percent of the volume of the reaction zone per minute. The inert gas can be passed into the polymerization reaction zone at room temperature or, if desired, preheated to the reaction temperature.

The following examples further illustrate the invention. The inherent viscosities (IV) mentioned in the examples were measured as a 0.4% solution in 97% concentrated sulfuric acid at 25°C and are expressed as decaliters per gram (dl/g) while the plugging values were measured by forming a 5% solution of the polymer in 97% sulfuric acid or a 6% solution in dimethyl acetamide (DMAc) containing 2% lithium chloride (LiCl) and filtering the solution at 25°C. and one atmosphere pressure through a Gelman Type A glass paper filter. The plugging value, which is the number of grams of polymer solution filtered per unit area in infinite time, is expressed in grams of polymer per square centimeter (g/cm²). A higher value indicates a polymer solution containing less gels and insolubles.

### EXAMPLES

### Example 1

Into a two liter cylindrical flask with a flat ground and a four necked top (equipped with a nitrogen inlet and outlet, a mechanical stirrer and a condenser) was placed 43.63 g (0.263 mol) of isophthalic acid, 56.35 g (0.263 mol) 3,3 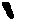 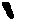 ,4,4 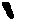 -tetraaminobiphenyl, 0.9 g (2.9 mmol) triphenylphosphite (catalyst), and 0.8 g 5-phenyltetrazole (1 % related to total polymer yield). The flask was degassed and filled with nitrogen. The degassing was repeated at least three times. The flask was then heated with a sand bath. Stirring was maintained at 300 rpm until condensate evolution began to slow and a rapid torque increase on the stir motor was seen. Stirring was terminated when the torque increased to 150 mV from a value before viscosity increase of 30 mV. The polymer temperature was 260 °C at this point. The sand bath temperature was increased to 290 °C and held at that temperature for 1.5 hours. The increase of foam height compared to the control experiment without foaming agent was 30 %. The resulting product was cooled to 170 °C and then was ground in the flask using the mechanical stirrer. The ground prepolymer was heated with stirring at 60 rpm at 380 °C for 185 minutes. The resulting polybenzimidazole exhibited an inherent viscosity (IV) of 0.59 dl/g and a conc. sulfuric acid plugging value (acid PV) of 0.3 g/cm².

### Example 2

The procedure of Example 1 was repeated and the second stage polymer was heated to 390 °C and held at that temperature for 185 minutes. The resulting polybenzimidazole exhibited an IV of 0.62 dl/g and an acid PV of 0.6 g/cm².

### Example 3

The procedure of Example 1 was repeated except that 1.0 g 5-phenyltrazole (1.25 %) was added to the reaction mixture. Stirring was terminated when the torque increased to 130 mV from a value before viscosity increase of 30 mV. The temperature of the polymer was 253 °C at this point.The increase of foam height compared to the control experiment without foaming agent was 40 %. The second stage polymer was heated to 390 °C and held at that temperature for 185 minutes. The resulting polybenzimidazole exhibited an IV of 0.57 dl/g and an acid PV of 0.2 g/cm².

### Example 4

The procedure of Example 3 was repeated except that 2 g 5-phenyltrazole (2.5 %) was added to the reaction mixture. The first stage polymer was heated to 300 °C and held at that temperature for 2 hours. The increase of foam height compared to the control experiment without foaming agent was 70 %. The second stage polymer was heated to 380 °C and held at that temperature for 1 hour. The resulting polybenzimidazole exhibited an IV of 0.48 dl/g and an acid PV of 0.4 g/cm².

### Example 5

The procedure of Example 4 was repeated except that the reaction flask was deep in the sand bath. The first stage polymer was heated to 290 °C and held at that temperature for 1.5 hours. The increase of foam height compared to the control experiment without foaming agent was 100 %. The second stage polymer was heated to 390 °C and held at that temperature for 3 hours. The resulting polybenzimidazole exhibited an IV of 0.67 dl/g and an acid PV of 0.9 g/cm².

### Example 6

The procedure of Example 3 was repeated except that 1.0 g Hydrocerol-HK (1.25 %) as a foaming agent was added to the reaction mixture. Stirring was terminated when the torque increased to 150 mV from a value before viscosity increase of 30 mV. The temperature of the polymer was 250 °C at this point. The first stage polymer was heated to 290 °C and held at that temperature for 1.5 hours. The increase of foam height compared to the control experiment without foaming agent was 65 %. The second stage polymer was heated to 400 °C and held at that temperature for 1 hour. The resulting polybenzimidazole exhibited an IV of 0.42 dl/g and an acid PV of 2 g/cm².

### Example 7

The procedure of Example 6 was repeated except that the second stage polymer was heated to 390 °C and held at that temperature for 185 minutes. The increase of foam height compared to the control experiment without foaming agent was 55 % after first stage heating was terminated. The resulting polybenzimidazole exhibited an IV of 0.44 dl/g and an acid PV of 1.5 g/cm².

### Example 8

The procedure of Example 6 was repeated except that the second stage polymer was heated to 380 °C and held at that temperature for 185 minutes. The increase of foam height compared to the control experiment without foaming agent was 60 % after first stage heating was terminated. The resulting polybenzimidazole exhibited an IV of 0.48 dl/g and an acid PV of 0.2 g/cm².

### Example 9

The procedure of Example 3 was repeated except that 2 g Hydrocerol-HK (2.5 %) was added to the reaction mixture. The first stage polymer was heated to 290 °C and held at that temperature for 1.5 hours. The increase of foam height compared to the control experiment without foaming agent was 90 %. The second stage polymer was heated to 380 °C and held at that temperature for 185 minutes. The resulting polybenzimidazole exhibited an IV of 0.44 dl/g and an acid PV of 0.2 g/cm².

### Example 10

The procedure of Example 3 was repeated except that 4 g Hydrocerol-HK (2.5 %) was added to the reaction mixture. The increase of foam height compared to the control experiment without foaming agent was 125 % after first stage heating was terminated. The second stage polymer was heated to 390 °C and held at that temperature for 185 minutes. The resulting polybenzimidazole exhibited an IV of 0.4 dl/g and an acid PV of 0.1 g/cm².

## Claims

1. A two stage process for producing polybenzimidazoles and aromatic amide polymers comprising the steps of:
1) providing a mixture of an aromatic amine, a dicarboxylic component, and a foaming agent;
2) heating the mixture to a condensation polymerization temperature in a first stage under a substantially oxygen-free atmosphere;
3) maintaining the mixture at said condensation polymerization temperature, but in no event greater than 350°C, while allowing a friable foam to form;
4) cooling the foam;
5) crushing the foam to obtain a prepolymer; and
6) heating the prepolymer in a second stage, to a temperature in excess of the highest temperatures employed in the first stage, under a substantially oxygen-free atmosphere, and until the desired inherent viscosity is obtained.

2. The process according to claim 1 wherein the foaming agent comprises a material that when heated releases a gas, but the gas will not be released below a temperature of about 190°C.

3. The process according to claim 1 wherein the foaming agent comprises a material that when heated releases a gas, but the gas will only release at a temperature ranging from about 190°C to about 300°C.

4. The process according to claim 1 wherein the foaming agent comprises a material that when heated releases a gas, but the gas will only release at a temperature ranging from about 220°C to about 280°C.

5. The process according to claim 1 wherein the foaming agent comprises tetrazoles and analogs of the tetrazoles.

6. The process according to claim 1 wherein the foaming agent is 5-phenyltetrazole.
